# EUROPÄISCHE PATENTSCHRIFT

(11) **EP 3 235 273 B1**
(45) Veröffentlichungstag und Bekanntmachung des Hinweises auf die Patenterteilung: **07.11.2018**
(21) Anmeldenummer: 15807640.6
(22) Anmeldetag: 07.12.2015
(51) Int. Cl.: H04W 4/40, H04L 29/06, H04W 4/12, H04W 4/70

(54) **TRIGGERBASIERTE ÜBERSETZUNG VON CAR2X NACHRICHT UNTERSCHIEDLICHER STANDARDS**
TRIGGER-BASED TRANSLATION OF CAR2X MESSAGES OF VARIOUS DIFERENT STANDARDS
TRANSMISSION PAR DÉCLENCHEMENT DE MESSAGE CAR2X DE NORMES DIFFERENTES

(30) Priorität: 18.12.2014 DE 102014226465
(43) Veröffentlichungstag der Anmeldung: 25.10.2017
(73) Patentinhaber: Continental Teves AG & Co. OHG, 60488 Frankfurt am Main (DE)
(72) Erfinder: SCHERPING, Richard, 65835 Liederbach am Taunus (DE); STÄHLIN, Ulrich, 65760 Eschborn (DE)
(86) Internationale Anmeldenummer: PCT/EP2015/078839
(87) Internationale Veröffentlichungsnummer: WO 2016/096507

(56) Entgegenhaltungen:
- EP-A1- 2 806 285
- US-A1- 2014 121 891
- US-A1- 2014 122 757
- "Intelligent transport systems - Communications access for land mobiles (CALM) - Architecture;ITSWG2(14)000035_Draft_ISO_21 217_result_of_", ETSI DRAFT; ITSWG2(14)000035_DRAFT_ISO_21217_RESULT_OF _REVISION, EUROPEAN TELECOMMUNICATIONS STANDARDS INSTITUTE (ETSI), 650, ROUTE DES LUCIOLES ; F-06921 SOPHIA-ANTIPOLIS ; FRANCE, Bd. ITS, 8. April 2014 (2014-04-08), Seiten 1-60, XP014184913, [gefunden am 2014-04-08]

## Beschreibung

Die Erfindung betrifft ein Verfahren zum Verarbeiten von Car2X Nachrichten mittels einer Verarbeitungseinrichtung, eine Transfereinheit dieser Verarbeitungseinrichtung und ein Steuergerät für eine Car2X Vorrichtung.

Der Aufbau und teilweise auch der Inhalt von Nachrichten für Fahrzeug-zu-X Kommunikation (nachfolgend mit Car2X abgekürzt) sind je nach Region durch unterschiedliche Standards festgelegt. Beispielsweise werden in Europa Car2X Nachrichten in zyklisch versendete Nachrichten, sogenannte Cooperative Awareness Messages (CAM), und in ereignisgesteuerte Nachrichten, sogenannte Decentralized Environmental Notification Message (DENM), unterschieden. In Nordamerika hingegen wird diese Unterscheidung nicht getroffen. Stattdessen verwendet man einen einzigen Nachrichtentypus, nämlich die so genannte Basic Safety Messages (BSM).

Die unterschiedlichen Typen von Nachrichten gemäß den Standards führen dazu, dass die darauf basierenden Anwendungen daran angepasst entwickelt werden müssen. Dies hat den Nachteil, dass eine doppelte Entwicklung der Anwendungen notwendig ist. Ferner können Fahrzeuge, die nur für einen der Standards ausgelegt sind, nicht in der Region betrieben werden, wo ein anderer Standard herrscht.

Das Dokument US 2014/0122757 A1 offenbart eine Vorrichtung zum Konvertieren von Nachrichten zwischen einer Fahrzeugelektronik und einem Mobiltelefon.

Aufgabe der Erfindung ist es daher, eine Möglichkeit aufzuzeigen, womit diese Nachteile vermieden werden können.

Die Aufgabe wird gelöst gemäß dem Verfahren nach Anspruch 1, der Transfereinheit nach Anspruch 10 und dem Steuergerät nach Anspruch 11. Vorteilhafte Ausführungsformen sind Gegenstand der abhängigen Ansprüche. Diese werden durch Bezugnahme ausdrücklich zum Inhalt der Beschreibung gemacht.

Die Erfindung beruht auf den Grundgedanken, die Anwendungseinheit weiterhin nur für einen Standard auszulegen bzw. kompatibel zu machen und Nachrichten, die gemäß einem anderen Standard aufgebaut sind so umzuwandeln bzw. von diesen Nachrichten ausgehend neue Nachrichten zu erzeugen, so dass sie durch die Anwendungseinheit verarbeitet werden können. Dabei wird berücksichtigt, dass es sinnvoll ist eine Nachricht nicht gemäß einem festen Schema zu erzeugen, sondern es in Abhängigkeit von mindestens einem vorbekannten Inhalt durchzuführen. D. h. die empfangene Nachricht wird daraufhin geprüft, ob es einen vorbekannten Inhalt aufweist, bspw. solche die es beim Erzeugen der neuen Nachricht zu berücksichtigen gilt. Dies hat den Vorteil, dass die Erzeugung der neuen Nachricht angepasst an den jeweiligen Inhalt der empfangenen Nachricht erfolgen kann. Ferner kann erst auf diese Weise auch eine Entscheidung erfolgen, in welche Art von Nachricht die empfangene Nachricht überführt werden soll. Dieser Fall ist insbesondere dann zu berücksichtigen, wenn eine Nachricht gemäß dem nordamerikanischen Standard in den europäischen Standard überführt werden soll. Andersherum kann das erzeugen der neuen Nachricht schneller erfolgen, wenn man den relevanten Inhalte berücksichtigt, weil man auf diese Weise die zu befüllenden Felder bzw. Daten in der Nachricht bereits erkannt hat.

Der vorbekannte Inhalt innerhalb der empfangenen Nachricht stellt eine ganz gezielte Information dar, mittels der die empfangene Nachricht relativ schnell klassifizierbar ist bzw. eingestuft werden kann.

Grundsätzlich kann es offen bleiben, ob die ursprünglich empfangene Nachricht in eine neue Nachricht überführt wird, bspw. mittels Modifikation der empfangenen Nachricht, oder ob eine vollständig neue Nachricht, d. h. ein neuer Datensatz, erzeugt wird. Insofern ist der Begriff "erzeugen" auf beide Arten zu verstehen.

Gemäß einer vorteilhaften Ausführungsform des erfindungsgemäßen Verfahrens ist der vorbekannte Inhalt dazu geeignet, ein Verkehrsereignis zu beschreiben. Insbesondere im Hinblick darauf, dass gemäß dem europäischen Standard ereignisbezogene Nachrichten definiert sind, kann mittels dieser Ausführungsform schon sehr früh eine Unterscheidung zwischen zwei Arten von Nachrichten getroffen werden. Auf diese Weise ist eine besonders schnelle Auswertung der empfangenen Nachricht möglich.

Gemäß einer vorteilhaften Ausführungsform des erfindungsgemäßen Verfahrens wird mittels mindestens eines Inhalts ein der Anwendungseinheit bekannter Anwendungsfall erkannt oder aus mehreren Inhalten ein Anwendungsfall abgeleitet. Neben der Definition von vorbekannten Inhalten mittels Verkehrsereignissen, kann auch eine Definition des Inhalts über vordefinierte Anwendungsfälle erfolgen.

Gemäß einer vorteilhaften Ausführungsform des erfindungsgemäßen Verfahrens umfasst der vorbekannte Inhalt eine vordefinierte Auslösebedingung. Mittels einer vordefinierten Auslösebedingung bzw. eines Triggers ist eine Auswertung der empfangenen Nachricht besonders schnell und einfach möglich.

Gemäß einer vorteilhaften Ausführungsform des erfindungsgemäßen Verfahrens ist die Auslösebedingung gemäß dem von der Anwendungseinheit verwendeten Standard definiert. Die Anwendungseinheit kann für bestimmte Verkehrsereignisse oder Anwendungsfälle einen oder mehrere Auslösebedingungen festlegen. Es ist zwar möglich, dass diese Auslösebedingung nicht exakt in der Nachricht gemäß dem anderen Standard vorzufinden ist. Es reicht jedoch aus, wenn eine vergleichbare Bedingung in der anderen Nachricht enthalten ist.

Gemäß einer vorteilhaften Ausführungsform des erfindungsgemäßen Verfahrens werden beim Erzeugen der neuen Nachricht die Inhalte der empfangenen Nachricht nur teilweise berücksichtigt. Auf diese Weise ist eine besonders effiziente Erzeugung einer neuen Nachricht möglich.

Insbesondere werden gemäß einer vorteilhaften Ausführungsform des erfindungsgemäßen Verfahrens nur solche Inhalte berücksichtigt, die zum Feststellen und / oder Bewerten eines Verkehrsereignisses oder Anwendungsfalls notwendig sind.

Gemäß einer vorteilhaften Ausführungsform des erfindungsgemäßen Verfahrens wird eine Nachricht einer ersten Art erzeugt, wenn mindestens ein vorbekannter Inhalt in der empfangenen Nachricht enthalten ist, und eine Nachricht einer zweiten Art erzeugt wird, wenn ein vorbekannter Inhalt in der empfangenen Nachricht nicht enthalten ist. Alternativ dazu ist es denkbar, das Verfahren derart auszuführen, dass jede Art der eingehenden Nachricht immer in eine einzige Art einer ausgehende Nachricht überführt wird.

Besonders vorteilhaft ist es gemäß einer vorteilhaften Ausführungsform des erfindungsgemäßen Verfahrens die Anwendungseinheit derart auszulegen zwei unterschiedliche Arten von Nachrichten zu verarbeiten, wobei die erste Art ereignisabhängig ist und die zweite Art ereignisunabhängig ist, wobei aus Nachrichten, die diese Unterscheidung nicht vorsehen, neue Nachrichten erster oder zweiter Art erzeugt werden. Vorteilhafter weise handelt es sich bei der ersten Art der Nachricht um eine DENM und bei der zweiten Art der Nachricht um eine CAM.

Die Erfindung umfasst ferner eine Verarbeitungseinrichtung zum Verarbeiten von Car2X Nachrichten, und derart ausgelegt ist, dass aus der eingehenden Nachricht eine neue Nachricht erzeugt und diese ausgegeben wird, dadurch gekennzeichnet, dass die neue Nachricht in Abhängigkeit von mindestens einem vorbekannten Inhalt innerhalb der empfangenen Nachricht erzeugt wird.

Weitere vorteilhafte Ausführungsformen der Verarbeitungseinrichtung werden in Kombination mit den Merkmalen der vorgenannten Ausführungsformen des erfindungsgemäßen Verfahrens gebildet.
Darüber hinaus umfasst die Erfindung ein Steuergerät für eine Car2X Vorrichtung mit einer Verarbeitungseinheit zum Verarbeiten von Car2X Nachrichten gemäß der vorstehenden Ausführungsformen.
Die Erfindung wird nachfolgend anhand eines Ausführungsbeispiels, mehreren Beispielfällen und einer Figur näher beschrieben. Es zeigt:

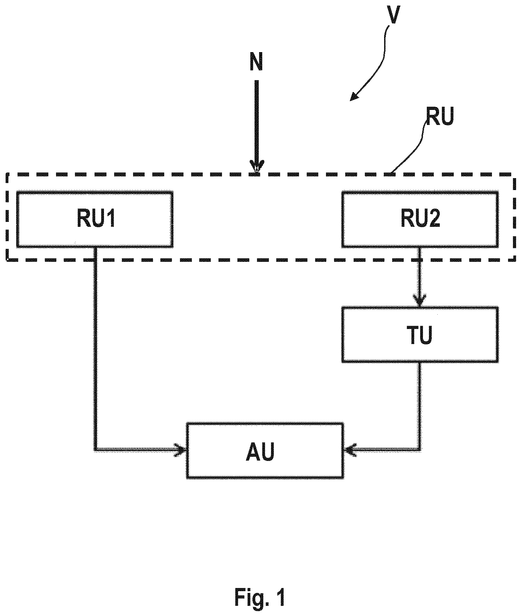

Figur 1 eine schematische Darstellung einer Verarbeitungseinheit mit einem Ausführungsbeispiel der erfindungsgemäßen Transfereinheit.
Figur 1 zeigt schematisch den Aufbau einer Verarbeitungseinrichtung V zum Verarbeiten von Car2X Nachrichten.

Die Verarbeitungseinrichtung V weist eine Empfangseinheit RU mit zwei Blöcken bzw. separaten Empfangseinheiten RU1, RU2 auf, die Nachrichten N unterschiedlicher Standards aufnehmen. In diesem Ausführungsbeispiel ist es zum einen der europäische und zum anderen der nordamerikanische Standard für Car2X Nachrichten. Über die erste Empfangseinheit RU1 werden Nachrichten gemäß dem europäischen Standard empfangen und weitergeleitet, insbesondere ereignisbasierte Nachrichten, wie z. B. DENM. Es ist aber auch möglich, über die erste Empfangseinheit RU1 zyklische Nachrichten zu empfangen, wie zum Beispiel CAM. Die zweite Empfangseinheit RU2 ist dafür vorgesehen Nachrichten gemäß dem nordamerikanischen Standard zu empfangen und weiterzuleiten, wie zum Beispiel BSM. Alternativ kann die Empfangseinheit RU ohne die Zweiteilung ausgebildet sein.

Die Verarbeitungseinrichtung V weist ferner eine Anwendungseinheit AU auf, welche die Nachrichten zur Bereitstellung von Anwendungen benutzt. Die Anwendungseinheit AU ist mit der ersten Empfangseinheit direkt gekoppelt, so dass Nachrichten N, die von der ersten Empfangseinheit RU1 empfangen werden unverändert an die Anwendungseinheit weitergeleitet werden. Nachrichten, die gemäß dem nordamerikanischen Standard aufgebaut sind, können nicht unmittelbar von der Anwendungseinheit AU verarbeitet werden. Diese werden mittels einer Transfereinheit TU in neue Nachrichten überführt, die den Aufbau des europäischen Standards aufweisen.

Es wird beim Empfang einer Nachricht folgendes Verfahren ausgeführt, um die neue Nachricht zu erzeugen. Die Verarbeitungseinrichtung V nimmt die Nachricht mittels der Empfangseinheit RU oder den Empfangseinheiten RU1, RU2 auf, wobei beim Empfangen erkannt wird, welchen Standard die Nachricht verwendet. Die Nachricht wird an die Anwendungseinheit AU weitergeleitet, wenn die Nachricht den europäischen Standard verwendet, für die die Anwendungseinheit ausgelegt ist. Andernfalls wird eine neue Nachricht aus der empfangenen Nachricht erzeugt, so dass sie mittels der Anwendungseinheit verarbeitbar ist, wobei die neue Nachricht in Abhängigkeit von mindestens einem vorbekannten Inhalt innerhalb der empfangenen Nachricht erzeugt wird. Hierzu wird die Nachricht auf bestimmte Inhalte geprüft bzw. gescannt.

Mittels mindestens eines vorbekannten Inhalts kann ein der Anwendungseinheit bekannter Anwendungsfall durch die Transfereinheit erkannt werden. Ein Anwendungsfall kann auch aus mehreren Inhalten abgeleitet werden. Alternativ dazu kann der Inhalt dazu geeignet sein ein Verkehrsereignis zu beschreiben. Ein Anwendungsfall kann dabei auch gleichzeitig ein Verkehrsereignis sein.

Im Idealfall umfasst der vorbekannte Inhalt eine oder mehrere vordefinierte Auslösebedingungen, die an einen Anwendungsfall oder an ein Verkehrsereignis gekoppelt ist. Für bestimmte Anwendungsfälle oder Verkehrsereignisse ist mindestens eine Auslösebedingung gemäß dem europäischen Standard definiert. Daher ist es vorteilhaft die empfangene Nachricht nach dem nordamerikanischen Standard auf solche Auslösebedingungen hin zu prüfen bzw. nach analogen oder äquivalenten Inhalten zu scannen. Hierzu werden nachfolgend drei Beispiele beschrieben.

Einen Anwendungsfall stellt die Aktivierung eines elektronischen Notbremslichts dar, der sogenannte "Dangerous Situations - Electronic Emergency Brake Light" Fall. Dieser Anwendungsfall ist gemäß dem europäischen Standard dann zu erkennen, wenn folgende Inhalte oder Auslösebedingungen in der DENM enthalten sind:
- ein Signal wird erkannt, welches das elektronische Notbremslicht anfordert, und
- die Verzögerung des Fahrzeugs ist kleiner als -4 m/s².
Eine Nachricht gemäß dem nordamerikanischen Standard bzw. eine BSM kann in einem Schritt mittels der Transfereinheit daraufhin geprüft werden,
- ob ein Inhalt in der Nachricht enthalten ist, die besagt, dass die Verzögerung kleiner als -4 m/s² ist, und
- ob ein Inhalt in der Nachricht enthalten ist, die besagt, dass die Fahrzeuggeschwindigkeit des sendenden Fahrzeugs oberhalb einer gewissen Schwelle liegt, beispielsweise 50km/h.

Optional kann noch die Information ausgewertet werden, ob ABS aktiviert ist, falls dieser optionale Inhalt in der BSM enthalten ist. Alternativ ist es auch denkbar, dass der optionale Inhalt "Starkes Bremsen" ("Hard Braking") als Information mitgeschickt wird. Dieser Inhalt kann verwendet werden, um den vorgenannten Anwendungsfall zu erkennen.

Ein Beispiel für ein Verkehrsereignis stellt einen Einsatz eines Einsatzfahrzeugs dar, das als sogenannter "Special Vehicle Warning - Emergency Vehicle in operation" Anwendungsfall gemäß dem europäischen Standard definiert ist. Die hier vorbekannten Inhalte, welche als Auslösebedingungen fungieren sind:
a) das Rundumlicht des Einsatzfahrzeugs ist im Einsatz.
   Weitere Auslösebedingungen (optional), welche die Erkennung des Anwendungsfalls verbessern, sind
b) die Sirenen sind im Einsatz
c) die aktuelle Geschwindigkeit des Fahrzeugs ist größer als 0 km/h.
   Ein zur Auslösebedingung a) analoges Datenfeld ist in der BSM Nachricht vorhanden, so dass in diesem Fall die Nachricht auf diese Auslösebedingung hin unmittelbar geprüft werden kann, in dem ermittelt wird,
   - ob das optionale Feld "Light Bar in use" mitgeschickt und den Wert "true" enthält.

Parallel dazu kann überprüft werden, ob in der BSM eine sogenannte "Emergency Vehicle Approaching Message" enthalten ist, was auch auf einen Einsatzfahrzeug schließen lässt. In diesem Fall würde die neue Nachricht in Abhängigkeit von mehreren vorbekannten Inhalten erzeugt werden.

Ein drittes Beispiel stellt ein stehendes oder stehengebliebenes Fahrzeug dar. Das sogenannte "Stationary Vehicle Warning - Stopped Vehicle" Verkehrsereignis wird gemäß dem europäischen Standard definiert, wenn folgender Sachverhalt zutrifft:
- das betroffene Fahrzeug hat seinen Warnblinker aktiviert,
- die Geschwindigkeit des betroffenen Fahrzeugs ist gleich 0 km/h, und
- ein Auslösezähler ist abgelaufen.

Alle drei Bedingungen werden innerhalb eines Erkennungszyklus geprüft. Hierbei wird für einen Erkennungszyklus ein Auslösezähler bzw. Auslösetimer gesetzt. Der Startwert des Auslösezählers beträgt 30 Sekunden [s] und wird gesetzt, sobald das Fahrzeug eine Geschwindigkeit von 0km/h hat und die Warnblinker gesetzt werden.

Der Auslösezähler wird durch folgende Ereignisse reduziert:
a) der Zähler wird um 10s reduziert, wenn die automatische Gangschaltung für mindestens 3s sich in der Parkstellung befindet,
b) der Zähler wird um 10s reduziert, wenn die Schaltung sich für mindestens 3s im Leerlauf befindet,
c) der Zähler wird um 10s reduziert, wenn die Handbremse für mindestens 3s Sekunden sich im angezogenen Zustand befindet,
d) der Zähler wird um 10s reduziert, wenn eine Anzahl von Sitzgurten für mindestens 3s sich in einem gelösten Zustand befinden,
e) der Zähler wird auf 0 gesetzt, wenn eine Anzahl von Türen für mindestens 3s geöffnet sind,
f) der Zähler wird auf 0 gesetzt, wenn die Zündung für mindestens 3s ausgeschaltet ist,
g) der Zähler wird auf 0 gesetzt, wenn die Heckklappe für mindestens 3s geöffnet ist, und / oder
h) der Zähler wird auf 0 gesetzt, wenn die Motorhaube für mindestens 3s geöffnet ist.

Die oben genannten Ereignisse zum reduzieren des Auslösezählers können jeweils nur einmal angewendet werden. Wenn der Zähler den Wert 0 angenommen hat, ist keine weitere Prüfung zum reduzieren des Zählers für den jeweiligen Erkennungszyklus notwendig. Während des gesamten Erkennungszyklus muss der Warnblinker aktiviert sein und die Geschwindigkeit gleich 0 km/h betragen. Andernfalls wird die Erkennung gestoppt.

Anhand dieses Beispiels wird deutlich, dass zum Erkennen eines Anwendungsfalls oder eines Verkehrsereignisses mehrere Inhalte, u. a. umfassend Auslösebedingungen, notwendig sind, um den besagten Fall bzw. Ereignis zu erkennen.

Im nordamerikanischen Standard sind nicht alle aus dem europäischen Standard bekannten Inhalte in der Nachricht enthalten. Es wird daher geprüft, ob analoge Inhalte vorhanden sind oder aus mehreren Inhalten ein solcher Fall oder Ereignis ableitbar ist. Dieses Verhalten wird daher auf der BSM nachgebildet. Dazu werden die Geschwindigkeitsinformationen aus der BSM verwendet und zusätzliche optionale Informationen, falls diese verfügbar sind, wie beispielsweise
- Warnblinkstatus
- Gangschaltungsstatus
- Hilfsbremsenstatus
geprüft. Vorteilhaft kann es seine eine Konkordanztabelle oder dgl. zu verwenden, welche die zueinander analogen oder äquivalenten enthält. Darin könnte bspw. definiert sein, welche Daten äquivalent zueinander verwendet werden können.

Da wie in diesem Beispiels gezeigt, in der Nachricht gemäß dem nordamerikanischen Standard nur ein Teil der Inhalte relevant ist, um den jeweiligen Fall oder Ereignis abzubilden, ist es vorteilhaft, beim Erzeugen der neuen Nachricht die Inhalte der empfangenen Nachricht nur teilweise zu berücksichtigen. Es werden solche berücksichtigt, die zum Feststellen eines Verkehrsereignisses oder Anwendungsfalls notwendig sind.

Darüber hinaus kann es vorkommen, dass eine Nachricht gemäß dem nordamerikanischen Standard keine Inhalte aufweist, die auf einen Anwendungsfall oder auf ein Verkehrsereignis hinweisen. Daher ist es vorteilhaft das Verfahren so durchzuführen, dass eine Nachricht einer ersten Art erzeugt wird, z. B. DENM, wenn mindestens ein vorbekannter Inhalt in der Empfangenen Nachricht enthalten ist, und eine Nachricht einer zweiten Art erzeugt wird, z. B. CAM, wenn ein vorbekannter Inhalt in der empfangenen Nachricht nicht enthalten ist.

Entsprechend ist auch die Anwendungseinheit so auszulegen, dass sie zwei unterschiedliche Arten von Nachrichten verarbeiten kann, wobei die erste Art ereignisabhängig ist und die zweite Art ereignisunabhängig ist, wobei aus Nachrichten, die diese Unterscheidung nicht vorsehen, neue Nachrichten erster oder zweiter Art erzeugt werden.

Die zur Anmeldung gehörigen Ansprüche stellen keinen Verzicht auf die Erzielung weitergehenden Schutzes dar.

Sofern sich im Laufe des Verfahrens herausstellt, dass ein Merkmal oder eine Gruppe von Merkmalen nicht zwingend nötig ist, so wird anmelderseitig bereits jetzt eine Formulierung zumindest eines unabhängigen Anspruchs angestrebt, welcher das Merkmal oder die Gruppe von Merkmalen nicht mehr aufweist. Hierbei kann es sich beispielsweise um eine Unterkombination eines am Anmeldetag vorliegenden Anspruchs oder um eine durch weitere Merkmale eingeschränkte Unterkombination eines am Anmeldetag vorliegenden Anspruchs handeln. Derartige neu zu formulierende Ansprüche oder Merkmalskombinationen sind als von der Offenbarung dieser Anmeldung mit abgedeckt zu verstehen.

Es sei ferner darauf hingewiesen, dass Ausgestaltungen, Merkmale und Varianten der Erfindung, welche in den verschiedenen Ausführungen oder Ausführungsbeispielen beschriebenen und/oder in den Figuren gezeigt sind, beliebig untereinander kombinierbar sind. Einzelne oder mehrere Merkmale sind beliebig gegeneinander austauschbar. Hieraus entstehende Merkmalskombinationen sind als von der Offenbarung dieser Anmeldung mit abgedeckt zu verstehen.

Rückbezüge in abhängigen Ansprüchen sind nicht als ein Verzicht auf die Erzielung eines selbständigen, gegenständlichen Schutzes für die Merkmale der rückbezogenen Unteransprüche zu verstehen. Diese Merkmale können auch beliebig mit anderen Merkmalen kombiniert werden.

Merkmale, die lediglich in der Beschreibung offenbart sind oder Merkmale, welche in der Beschreibung oder in einem Anspruch nur in Verbindung mit anderen Merkmalen offenbart sind, können grundsätzlich von eigenständiger erfindungswesentlicher Bedeutung sein. Sie können deshalb auch einzeln zur Abgrenzung vom Stand der Technik in Ansprüche aufgenommen werden.

## Patentansprüche

1. Verfahren zum Verarbeiten von Car2X Nachrichten (N) mittels einer Verarbeitungseinrichtung (V), die derart ausgebildet ist, dass sie Nachrichten (N) empfangen und verarbeiten kann, deren Aufbau nach unterschiedlichen Standards definiert ist, vorzugsweise nach einem ersten und einem zweiten Standard, aufweisend die Schritte:
- Aufnehmen der Nachricht (N) mittels der Verarbeitungseinrichtung (V),
- Erkennen des von der Nachricht (N) verwendeten Standards,
- Weiterleiten der Nachricht (N) an eine Anwendungseinheit (AU) der Verarbeitungseinrichtung (V), wenn die Nachricht (N) den Standard verwendet, für die die Anwendungseinheit (AU) ausgelegt ist,
- andernfalls Erzeugen einer neuen Nachricht aus der empfangenen Nachricht (N), so dass sie mittels der Anwendungseinheit (AU) verarbeitbar ist,
wobei die neue Nachricht in Abhängigkeit von mindestens einem vorbekannten Inhalt innerhalb der empfangenen Nachricht (N) erzeugt wird.

2. Verfahren nach Anspruch 1, wobei der vorbekannte Inhalt dazu geeignet ist, ein Verkehrsereignis zu beschreiben.

3. Verfahren nach einem der vorstehenden Ansprüche, wobei mittels mindestens eines Inhalts ein der Anwendungseinheit (AU) bekannter Anwendungsfall erkannt oder aus mehreren Inhalten ein Anwendungsfall ableitbar ist.

4. Verfahren nach einem der vorstehenden Ansprüche, wobei der vorbekannte Inhalt eine vordefinierte Auslösebedingung umfasst.

5. Verfahren nach Anspruch 4, wobei die Auslösebedingung gemäß dem von der Anwendungseinheit (AU) verwendeten Standard definiert ist.

6. Verfahren nach einem der vorstehenden Ansprüche, wobei beim Erzeugen der neuen Nachricht die Inhalte der empfangenen Nachricht (N) nur teilweise berücksichtigt werden.

7. Verfahren nach Anspruch 6, wobei nur solche Inhalte berücksichtigt werden, die zum Feststellen und / oder Bewerten eines Verkehrsereignisses oder Anwendungsfalls notwendig sind.

8. Verfahren nach einem der vorstehenden Ansprüche, wobei eine Nachricht einer ersten Art erzeugt wird, wenn mindestens ein vorbekannter Inhalt in der Empfangenen Nachricht (N) enthalten ist, und eine Nachricht einer zweiten Art erzeugt wird, wenn ein vorbekannter Inhalt in der empfangenen Nachricht (N) nicht enthalten ist.

9. Verfahren nach einem der vorstehenden Ansprüche, wobei die Anwendungseinheit (AU) dazu ausgelegt ist zwei unterschiedliche Arten von Nachrichten (N) zu verarbeiten, wobei die erste Art ereignisabhängig ist und die zweite Art ereignisunabhängig ist, wobei aus Nachrichten (N), die diese Unterscheidung nicht vorsehen, neue Nachrichten erster oder zweiter Art erzeugt werden.

10. Verarbeitungseinrichtung (V) zum Verarbeiten von Car2X Nachrichten (N), und dazu konfiguriert ist, ein Verfahren nach einem der vorhergehenden Ansprüche auszuführen

11. Steuergerät für eine Car2X Vorrichtung mit einer Verarbeitungseinrichtung zum Verarbeiten von Car2X Nachrichten nach Anspruch 10.

## Claims

1. A method for processing car2X messages (N) by means of a processing device (V) configured to be able to receive and process messages (N), the construction of which is defined according to different standards, preferably according to a first standard and a second standard having the steps of:
- recording the message (N) by means of the processing device (V),
- identifying the standard used by the message (N),
- forwarding the message (N) to an application unit (AU) of the processing device (V) if the message (N) uses the standard for which the application unit (AU) is designed,
- or otherwise creating a new message from the received message (N) so that it can be processed by means of the application unit (AU),
wherein the new message is created in accordance with at least one previously known content item within the received message.

2. The method according to Claim 1, wherein the previously known content item is suitable for describing a traffic event.

3. The method according to any one of the preceding claims,
wherein an application case known to the application unit (AU) is identified by means of at least one content item or an application case can be deduced from multiple content items.

4. The method according to any one of the preceding claims,
wherein the previously known content item comprises a predefined triggering condition.

5. The method according to Claim 4, wherein the triggering condition is defined according to the standard used by the application unit (AU).

6. The method according to any one of the preceding claims,
wherein the content items of the received message (N) are only partially considered when the new message is created.

7. The method according to Claim 6, wherein only those content items which are required to establish and/or evaluate a traffic event or application case are considered.

8. The method according to any one of the preceding claims,
wherein a message of a first type is created if at least one previously known content item is contained in the received message (N), and a message of a second type is created if a previously known content item is not contained in the received message (N).

9. The method according to any one of the preceding claims,
wherein the application unit (AU) is designed to process two different types of messages (N), wherein the first type is dependent on the event and the second type is not dependent on the event, wherein new messages of the first or second type are created from messages (N) which do not make provision for this distinction.

10. A processing device (V) for
processing car2X messages (N),
and configured to carry out a method according to any one of the preceding claims.

11. A control unit for a car2X apparatus having a processing device for processing car2X messages
according to Claim 10.

## Revendications

1. Procédé pour le traitement de messages véhicule à x, Car2x, (N) au moyen d'un dispositif de traitement (V), lequel est formé de telle sorte qu'il peut recevoir et traiter des messages (N) dont la structure est définie par différents standards, de préférence selon un premier et un deuxième standards, présentant les étapes :
- enregistrement du message (N) au moyen du dispositif de traitement (V),
- identification du standard utilisé par le message (N),
- transmission du message (N) à une unité d'application (AU) du dispositif de traitement (V) lorsque le message (N) utilise le standard pour lequel l'unité d'application (AU) est conçue,
- dans le cas contraire, génération d'un nouveau message à partir du message reçu (N), de telle sorte qu'il peut être traité au moyen de l'unité d'application (AU),
le nouveau message étant généré en fonction d'au moins un contenu préalablement connu contenu par le message reçu (N).

2. Procédé selon la revendication 1, le contenu préalablement connu étant propre à décrire un événement de circulation.

3. Procédé selon l'une quelconque des revendications précédentes, un cas d'application connu de l'unité d'application (AU) étant reconnu ou un cas d'application pouvant être déduit à partir de plusieurs contenus, au moyen d'au moins un contenu.

4. Procédé selon l'une quelconque des revendications précédentes, le contenu préalablement connu comprenant une condition de déclenchement prédéfinie.

5. Procédé selon la revendication 4, la condition de déclenchement étant définie conformément au standard utilisé par l'unité d'application (AU).

6. Procédé selon l'une quelconque des revendications précédentes, les contenus du message reçu (N) n'étant pris en compte que partiellement lors de la génération du nouveau message.

7. Procédé selon la revendication 6, seuls les contenus nécessaires à la constatation et/ou à l'évaluation d'un événement de circulation ou d'un cas d'application étant pris en compte.

8. Procédé selon l'une quelconque des revendications précédentes, un message d'un premier type étant généré lorsqu'au moins un contenu préalablement connu est contenu par le message reçu (N), et un message d'un deuxième type étant généré lorsqu'un contenu préalablement connu n'est pas contenu par le message reçu (N).

9. Procédé selon l'une quelconque des revendications précédentes, l'unité d'application (AU) étant conçue pour traiter deux types différents de messages (N), le premier type dépendant d'événements et le deuxième type ne dépendant pas d'événements, de nouveaux messages du premier ou du deuxième type étant générés à partir de messages (N) qui ne prévoient pas cette distinction.

10. Dispositif de traitement (V) pour le traitement de messages Car2X (N) et configuré afin d'exécuter un procédé selon l'une quelconque des revendications précédentes.

11. Appareil de commande pour un dispositif Car2X avec un dispositif de traitement pour le traitement de messages V2X selon la revendication 10.
